# EUROPEAN PATENT SPECIFICATION

(11) **EP 0 964 813 B1**
(45) Date of publication and mention of the grant of the patent: **23.01.2002**
(21) Application number: 98908321.7
(22) Date of filing: 03.03.1998
(51) Int. Cl.: B62D 33/04

(54) **SECTION SYSTEM**
PROFILSYSTEM
SYSTEME DE SECTIONS

(30) Priority: 04.03.1997 NL 1005433
(43) Date of publication of application: 22.12.1999
(73) Proprietor: REYNOLDS ALUMINIUM HOLLAND B.V., NL-3846 BX Harderwijk (NL)
(72) Inventor: GIJSBERS, Erik, Hendrik, NL-8253 AD Dronten (NL)
(74) Representative: Ottevangers, Sietse Ulbe
(86) International application number: NL9800121
(87) International publication number: WO9839198

(56) References cited:
- EP-A- 0 061 994
- DE-B- 1 108 576
- DE-U- 29 519 372
- FR-A- 1 530 016
- US-A- 2 312 489

## Description

The invention relates to a section system according to the preamble of claim 1.

Such section system is known from DE-A-1 108 576 and from practice in the form of edge sections for wall panels of a loading platform of a truck, which edge sections are arranged for interconnecting those wall panels with mutually parallel edges and at perpendicular angles. In such system, the connecting members for interconnecting the sections so as to be mutually parallel are formed by rivets or pop rivets provided at positions distributed over the sections. Walls of the holes in the projecting flange of in each case one of the mutually parallel sections, through which the rivets are provided, constitute the engagement surfaces at a distance from the base of those flanges, which surfaces are engaged by the connecting members for retaining that section relative to the relevant other one of the parallel-connected sections.

A drawback of this known system is that the provision of the rivets is a laborious operation and that at the end of the lifetime of the loading platform, or if replacement of a damaged wall of the loading platform is desired, the sections can practically only be removed from each other by separating the projecting flange of one of the sections from that section, which is a highly time-consuming operation. Moreover, play as a consequence of, for instance, loads changing over a long period or an incidental overload, causing leakage and rattling of the connection, is hard to overcome.

A further drawback of this known system is that the rivets project from the sections or that recessed holes are required and that dirt and moisture may be left behind in slits between the rivets and the sections, which complicates cleaning according to the standards of foodstuffs processing.

Further, many section systems are known in which the sections can be interconnected by flanges constructed as snap fingers. Although these section systems are generally easier to assemble, a proper connection requires the maintenance of very narrow tolerances during the manufacture, which moreover imposes limitations on the variety of surface treatments that can be applied. Further, in these section systems, too, the sections, interconnected so as to be mutually parallel, are very hard to separate from each other after the lifetime of the construction or for the purpose of repairing the construction.

The object of the invention is to provide a section system which is easy to assemble, repair and disassemble and whereby a reliable rattle-free and leak-free connection between mutually parallel sections is obtained without particularly heavy demands being imposed on the manufacturing tolerances of the sections. Further, the object of the invention is to provide a section system which can be constructed in a simple manner and without projecting parts.

According to the present invention, this object is attained by constructing a section system of the initially indicated type in conformity with the characterizing portion of claim 1.

The sections of the system according to the invention can be readily connected by bringing the projecting flanges of the first and the second section into an overlapping position while the connecting members are in a retracted position, and by subsequently bringing the connecting members into a projecting position relative to the retracted position, as a result of which the sections are locked relative to each other to form a strong and rigid assembly.

Moreover, due to the connection by means of separate connecting members, rattling and leaking are prevented with great reliability, without the necessity of maintaining particularly accurate dimensional tolerances in respect of the sections. Moreover, the connecting members can be concealingly mounted to obtain a flat finishing of the assembly.

The sections can also be readily detached again by bringing the connecting members into the retracted position again. Retightening of the connection is also possible, by bringing the connecting members into a position in which they project further. This last can for instance be effected by hand or by means of resilient members of the connecting members.

Particular embodiments of the invention become apparent from claims 2-10. Further aspects and advantages of the invention appear from the following description, in which the invention is illustrated in more detail and explained with reference to a number of exemplary embodiments. For this, reference is made to the accompanying drawings, in which:
Fig. 1 is pulled-apart view in cross section, at the location of a connecting member, of a section system according to a first exemplary embodiment of the invention;
Fig. 2 is a view corresponding to Fig. 1 in a second stage of assembly, precisely before the sections to be connected are positioned relative to each other;
Fig. 3 is a view corresponding to Figs. 1 and 2 in a third stage of assembly, precisely after the sections to be connected have been positioned relative to each other and before they are locked relative to each other;
Fig. 4 is a view corresponding to Figs. 1-3 in an assembled condition;
Fig. 5 is a cross-sectional view, at the location of a connecting member, of a section system according to a second exemplary embodiment of the invention; and
Fig. 6 is a perspective view of a connecting member of a section system according to third exemplary embodiment of the invention.

First, the exemplary embodiment of the invention which is presently most preferred will be dealt with, after which some special variants will be described and explained.

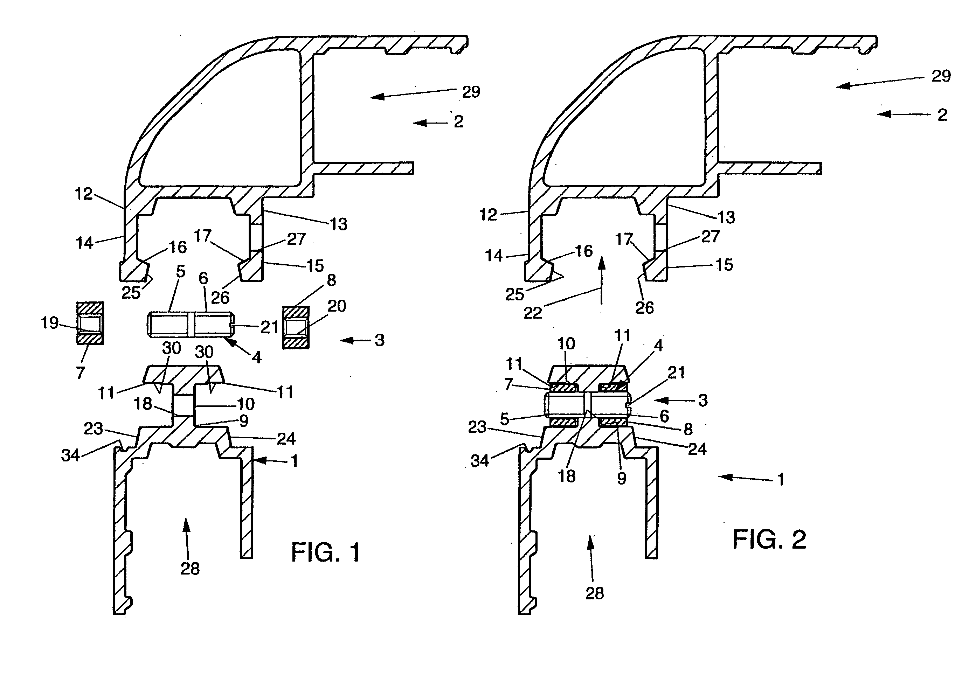

Fig. 1 shows the parts of the proposed section system in a pulled-apart configuration. One can distinguish a first section 1, a second section 2 and a number of connecting members 3 which each comprise a stud 4 provided with oppositely wound screw thread portions 5, 6 and two locking elements 7, 8. For interconnecting the sections 1 and 2 so as to be parallel to each other, at positions distributed over the sections 1, 2, several connecting members 3 are used. The first section 1 has a flange 10 projecting from a base 9 and carrying, spaced from the base 9, engagement surfaces 11 facing the base 9.

The second section 2 has two flanges 14, 15, each projecting from a base 12, 13. Each of these flanges 14, 15, too, carries an engagement surface 16, 17 facing the associated base 12, 13 respectively and spaced from that base 12, 13 respectively.

Assembling two sections 1, 2 of the section system shown according to the example proposed, starts with mounting the connecting members 3 onto the first section. To this end, a stud 4 is in each case passed through an opening 18 in the projecting flange 10 of the first section 1, and, next, the locking elements 7, 8 are screwed over the screw thread portions 5, 6 of the relevant stud 4.

Because the screw thread portions 5, 6 of each stud 4 have oppositely wound threads, for effecting this, it is sufficient to rotate the stud 4 in one rotational sense as soon as the screw thread portions 5, 6 are brought into engagement with threaded bores 19, 20 in the clamping members 5, 6.

To enable turning the studs 4 by means of a screwdriver, they are each provided, at one end face thereof, with a cut 21 that can be engaged by the blade of a screwdriver. Of course, the end faces of the studs may also be designed for cooperating with other tools, such as a crosshead screwdriver or a socket head wrench. Because each stud 4 has only one end thereof provided with a provision 21 that can be engaged by a tool, the rotational sense for causing the studs 4 to retract or project is identical for all studs 4 which are mounted with the heads to be tool-operated located on the same side of the flange 10. The studs 4 are each rotated until the relevant connecting member 3 has reached a retracted condition. It is then carried by the first section 1, as shown in Fig. 2.

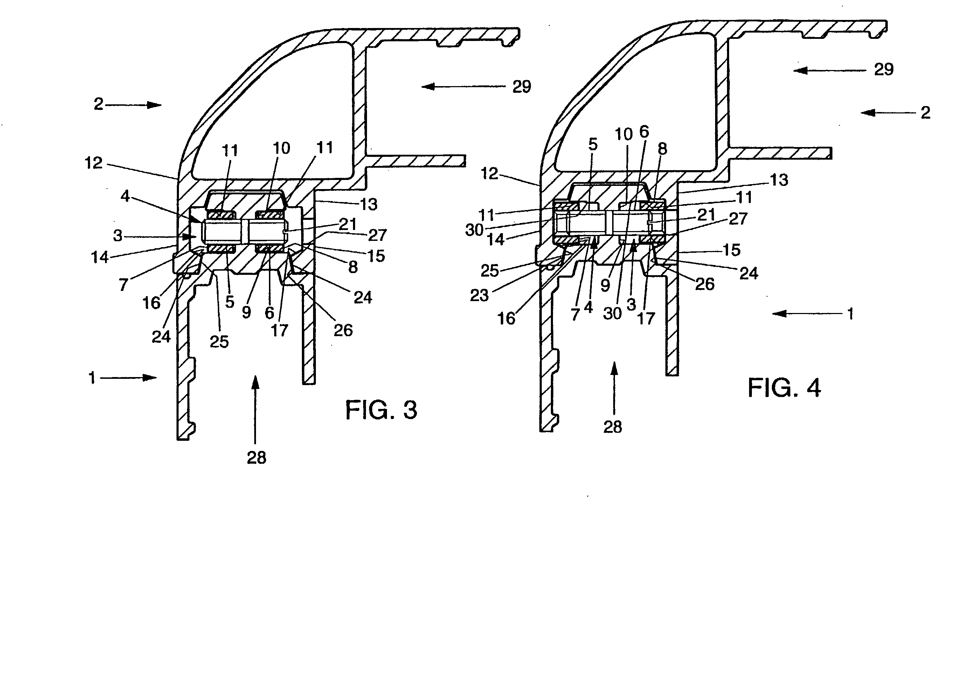

In the retracted condition shown in Fig. 2, the connecting member 3 has, in a direction transverse to the flange 10, dimensions which are so small that it fits through a constriction between the engagement surfaces 16, 17 carried by the flanges 14, 15 of the second section 2. Hence, the section 1 can be displaced towards the second section 2 in the direction indicated by an arrow 22 in Fig. 2, until the projecting flange 10 of the first section 1 and the projecting flanges 14, 15 of the second section 2 overlap, as is shown in Fig. 3. The engagement surfaces 11 of the projecting flange 10 of the first section 1 on the one hand and the engagement surfaces 16, 17 of the flanges 14, 15 of the second section 2 on the other are then in a configuration in which they face each other.

Finally, the connecting members 3 are each moved in transverse direction relative to the projecting flanges 10, 14, 15, from the retracted condition into a more projecting condition, by screwing the studs 4 back again. The studs 4 are screwed back until the locking elements 7, 8 have reached the condition shown in Fig. 4, in which they each engage two opposite engagement surfaces 11, 14 and 11, 15 respectively, and lock and clamp the first section 1 and the second section 2 in the intercoupled condition shown.

To enable rotation of the studs 4 while the sections 1 and 2 are in a configuration in which the projecting flanges 10, 14, 15 thereof overlap, bores 27 have been provided in the flange 15, to be turned inwards, of the second section. To prevent any problems resulting from positions of the bores 27 and the studs 4 being not exactly in line in longitudinal direction of the sections 1, 2, there may also be provided, instead of the bores 27, elongated slotted holes in longitudinal direction of the sections 1, 2.

In order to fix the first and second sections 1, 2 relative to each other not only in the direction in which they are intercoupled, but also in a direction transverse thereto, the first and the second section 1, 2 comprise portions 23, 24, 25, 26 which, in mounted condition, abut against each other and which prevent mutual displacement of the intercoupled sections transverse to the projecting flanges 10, 14, 15.

In this manner, the sections 1, 2 can readily be interconnected. Interconnected sections 1, 2 can readily be detached again by bringing the connecting members 3 into the retracted condition again. Retightening of the connection is also possible, by tightening the studs 4 further, so that the connecting members 3 are brought into a condition in which they project further. The connecting members 3 do not project from the assembly of interconnected sections 1, 2.

The sections 1, 2 are each provided with a groove 28, 29, in which an edge of a plate can be confined. The plate with sections 1 or 2 along the side edges thus forms a panel that is for instance suitable for use as wall element of a loading platform of a truck or van or a trailer.

The engagement surfaces 16, 17 carried by the projecting flanges 14, 15 of the second section extend under a wedge angle relative to a plane transverse through the flanges 14, 15. The effect thus achieved is that if the connecting members are moved from the retracted condition shown in Fig. 3 into the more projecting condition shown in Fig. 4, these connecting members engage the engagement surfaces 16, 17 which are bevelled so as to be wedge-shaped, and the sections are clamped together with a force greater than the force with which the connecting members 3 are urged towards the projecting condition thereof. In this manner, when the connecting members 3 are being moved into the projecting condition, it is, with a limited power exertion on those members 3, still possible to realize a substantial clamping force between the two sections 1, 2 to be connected.

In this regard, a particularly stable fixation of the sections 1, 2 relative to each other is reached in that, moreover, the abutting portions 23-26 of the interconnected sections 1, 2, which prevent mutual displacement of these sections 1, 2 in at least a direction transverse to the projecting flanges 10, 14, 15 thereof, engage each other conically when viewed in cross section. This conical shape provides an additional reinforcement of the clamping force with which the sections 1, 2 are pressed together.

As the connecting members 3 on either side of the projecting flange 10 of the first section 1, 2 engage the engagement surfaces 16, 17 that are carried by the two projecting flanges 14, 15 of the second section 2, the clamping forces exerted on either side of the flange 10 of the first section 1 are in balance and the sections 1 and 2 are clamped together along spaced apart lines of action. As a result, the sections 1, 2 are also fixed in a very effective manner against mutual rotation about the longitudinal axes thereof.

The engagement surfaces 11, 16, 17 are formed by wall surfaces of engagement flanges facing the associated base 9, 12 and 13 respectively and projecting transversely from the relevant projecting flange 10, 14, 15. This offers the advantage that no separate operations are required for providing the engagement surfaces, that they extend over the entire length of the sections and that they are located entirely on the inside of the assembly of mounted sections, so that this assembly can be of smooth design on the outside.

However, it is also possible to design the engagement surfaces differently, for instance as wall surfaces of holes in the projecting flanges. In the section system according to Figs. 1-4, for instance a portion of the wall of the hole 18, which portion faces the base 9 of the flange 10 of the first section, could be used as engagement surface. The friction between the hole 18 and the stud 4, however, would complicate the operation of the stud 4. Because the locking elements 7, 8 each constitute a direct bridging between engagement surfaces 11, 14 and 11, 15 respectively of the two sections 1, 2, direct load on the stud 4 and the screw thread thereof by the forces to be transmitted by the connecting member 3 is prevented, the friction experienced by the stud 4 during securement of the sections 1, 2 is limited and a direct, rigid coupling between the sections 1 and 2 is obtained.

The engagement surfaces 11 carried by the projecting flange 10 of the first section 1 are each provided with a locking edge 30 which each form an edge against which the locking elements 7, 8 run during retraction and which thus prevent the locking elements 7, 8 from vibrating loose unintentionally beyond a position in which the sections 1, 2 are no longer interlocked. Instead of or in addition to the locking edges 30 shown, locking edges may also be provided in surfaces of each of the locking elements 7, 8, which surfaces abut against the engagement surfaces 11.

Since the connecting members 3 are each composed of a stud 4 having screw thread and locking elements 7, 8 screwed over the stud 4, a substantial clamping force can be developed with a limited power exertion and the connecting members 3 can moreover readily be moved into the retracted condition again, which simplifies the detachment of the connection. This renders the connection shown even suitable for explicitly demountable structures such as stand-building constructions.

Because the locking elements 7, 8 are each confined in a groove of the first section 1 so as to be substantially nonrotatable about the center line of the associated stud 4, for operating the connecting members 3 it suffices to rotate the studs 4. Hence, it is not necessary to retain the locking elements 7, 8 to prevent them from rotating with the studs 4.

Provided in the first section 1 is a channel 34 intended for partially receiving a string of cement, arranged for bringing the sections 1, 2 into the intended positions relative to each other.

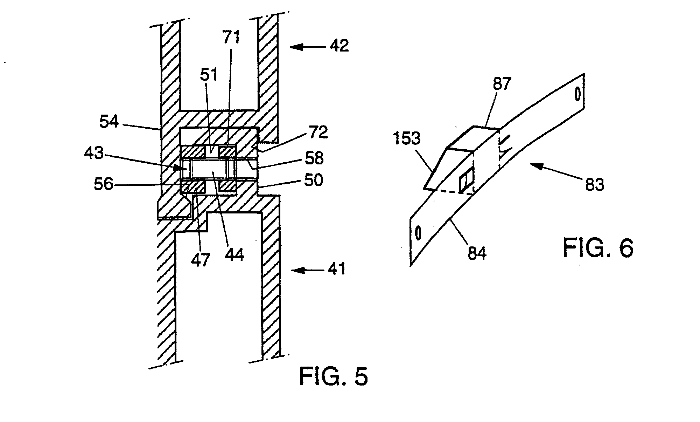

Fig. 5 shows a coupling portion of an alternative embodiment of a section system according to the invention. In this embodiment, the two sections 41, 42 each comprise an engagement surface 51, 56 carried by a projecting flange 50, 54. The connecting members 43 are each composed of a stud 44 with oppositely wound screw thread portions, one locking element 47 and a support ring 71. Provided in the projecting flange 50 of the first section 41 are holes 58, whose walls are each provided with screw thread. The holes 58 also form openings through which a tool can be passed for rotating each of the studs 44.

In retracted condition, the studs 44 are each screwed by some windings into one of the holes 58 and the locking elements 47 are each screwed onto one of the studs 44. By rotating the studs 44 after the sections have been brought into the interlocking configuration, the studs 44 are screwed from the holes 58 and the locking element is clamped between the engagement surfaces 51, 56, whereby the sections 41, 42 are clamped together. An edge 72 of the second section 42 which edge engages the projecting flange 50 of the first section 41 forms a stop which prevents the sections 41, 42 from being displaced relative to each other under the influence of the forces exerted by the connecting members 43 transverse to the projecting flanges 50, 54.

Fig. 6 shows an alternative embodiment of a connecting member 83. In this connecting member 83, the operating member for displacing the locking element 87 from the retracted condition into the projecting condition is constructed as a leaf spring 84. The locking element 87 is provided with a bevelled face end 153, which causes the connecting members 3 to be pressed into the retracted condition when the sections to be connected are put together, and then slip behind the engagement surface or the engagement surfaces of the second section.

## Claims

1. A section system comprising a first section (1; 41) and a second section (2; 42) and connecting members (3; 43; 83) for coupling said sections (1, 2; 41, 42) parallel to each other at positions distributed over the sections (1, 2; 41, 42), the first section (1; 41) having a flange (10; 50) which extends from a base (9) and carries at least one first engagement surface (11; 51) spaced from and facing said base (9), **characterized in that**
the second section (2; 42) has a flange (14, 15; 54) which projects from a base (12, 13) and which carries at least one engagement surface (16, 17; 56) spaced from and facing said associated base (12, 13), and which, when the sections (1, 2; 41, 42) are in coupled condition, overlaps said projecting flange (10; 50) of the first section (1; 41), and that, if carried by the first section (1; 41), the connecting members (3; 43; 83), each in a retracted condition, allow said projecting flanges (10; 14; 15; 50; 54) to be brought into said mutually overlapping configuration, and, each in a condition in which, relative to said retracted condition, they project further in transverse direction from said projecting flange (10; 50) of the first section (1; 41), engage said first and second engagement surfaces (11; 16, 17; 56, 57) and lock said sections (1, 2; 41, 42) in said coupled condition.

2. A section system according to claim 1, wherein at least one of said engagement surfaces (11, 16, 17; 51, 56), or at least one surface of each of the connecting members (3; 43; 83) which surface in mounted condition engages one of the engagement surfaces, extends under a wedge angle relative to said transverse direction, so that the sections (1, 2; 41, 42) are clamped together if connecting members (3; 43; 83) are urged towards the projecting condition thereof.

3. A section system according to claim 1 or 2, wherein the first and the second section (1, 2) in mounted condition have abutting portions (23, 24, 25, 26) which prevent mutual displacement of said sections in at least a direction transverse to said projecting flanges (10, 14, 15) and which, viewed in cross section, engage each other conically.

4. A section system according to any one of the preceding claims, wherein the second section (2) has two of said projecting flanges (14, 15) which, if the sections (1, 2) are in mounted condition, overlap said projecting flange (10) of the first section (1) on either side and each carry one of said associated second engagement surfaces (16, 17), and wherein said connecting members (3) each on either side of said projecting flange (10) of the first section (1) engage said second engagement surfaces (16, 17).

5. A section system according to any one of the preceding claims, wherein at least one of said engagement surfaces (11, 16, 17; 51, 56) is formed by a wall surface, facing said associated base (9), of an engagement flange projecting transversely from the relevant projecting flange.

6. A section system according to any one of the preceding claims, wherein the connecting members (3; 43; 83) are each composed of an operating element (4; 44; 84) and at least one locking element (7, 8; 47, 87) which can be urged through said operating element (4; 44; 84) away from said projecting flange (10; 50) of the first section (1; 41), wherein, if said sections (1, 2; 41, 42) are in mounted condition, said locking elements (7, 8; 47; 87) each constitute a direct bridging between engagement surfaces (11, 16, 17; 51, 56) of the coupled sections (1, 2; 41, 42).

7. A section system according to claim 6, wherein the at least one engagement surface (11) carried by the projecting flange (10) of the first section (1), or surfaces, abutting thereagainst, of each of said locking elements (7, 8) are designed with a locking edge (30).

8. A section system according to any one of the preceding claims, wherein the connecting members (3; 43) are each composed of a stud (4, 44) and a locking element (7, 8, 47) screwed over said stud (4, 44).

9. A section system according to claims 4 and 8, wherein each of said studs (4) carries two locking elements (7, 8) on either side of the projecting flange (10) of the first section (1), and screw thread portions (5, 6) of each of said studs (4) that are in engagement with two associated ones of said locking elements (7, 8) are oppositely wound.

10. A section system according to claim 8 or 9, wherein said locking elements (7, 8, 47), relative to the first section (1, 41), are each confined in a groove of the first section (1, 41) so as to be substantially nonrotatable about the center line of the associated stud (4, 44).

## Patentansprüche

1. Profilsystem mit einem ersten Profil (1; 41) und einem zweiten Profil (2; 42) und Verbindungstellen (3; 43; 83) zum Verbinden der Profile (1, 2; 41, 42) parallel zueinander an Positionen, die über die Profile (1, 2; 41, 42) verteilt sind, wobei das erste Profil (1; 41) einen Flansch (10; 50) aufweist, der sich von einer Basis (9) aus erstreckt und wenigstens eine Angriffsfläche (11; 51) aufweist, die von der Basis (9) beabstandet und dieser zugewandt ist, **dadurch gekennzeichnet, daß**
das zweite Profil (2; 42) einen Flansch (14, 15; 54) aufweist, der von einer Basis (12, 13) vorsteht und wenigstens eine Angriffsfläche (16, 17; 56) aufweist, die von der zugehörigen Basis (12, 13) beabstandet und dieser zugewandt ist, und der, wenn die Profile (1, 2; 41, 42) miteinander verbunden sind, den vorstehenden Flansch (10; 50) des ersten Profils (1; 41) überlappt, und daß, wenn sie vom ersten Profil (1; 41) getragen sind, die Verbindungsteile (3; 43; 83), jedes in zurückgezogenem Zustand, ermöglichen, die vorstehenden Flansche (10; 14; 15; 50; 54) in gegenseitige Überlappung zu bringen, und die Verbindungsteile, wenn sie sich jeweils in einem Zustand befinden, in dem sie gegenüber dem zurückgezogenen Zustand in Querrichtung vom vorstehenden Flansch (10; 50) des ersten Profils (1; 41) in Querrichtung weiter vorstehen, an der ersten und zweiten Angriffsfläche (11; 16. 17; 56, 57) angreifen und die Profile (1, 2; 41, 42) im Verbindungszustand verriegeln.

2. Profilsystem nach Anspruch 1, bei dem wenigstens eine der Angriffsflächen (11; 16, 17; 56, 57) oder wenigstens eine Fläche jedes der Verbindungsteile (3; 43; 83), die im Montagezustand an einer der Angriffsflächen angreift, sich in einem Keilwinkel zur Querrichtung erstreckt, so daß die Profile (1, 2; 41, 42) zusammengeklemmt werden, wenn die Verbindungsteile (3; 43; 83) in ihren vorstehenden Zustand gedrückt werden.

3. Profilsystem nach Anspruch 1 oder 2, bei dem das erste und das zweite Profil (2, 2) im montierten Zustand aneinanderliegende Bereiche (23, 24, 25, 26) aufweisen, die ein gegenseitiges Verschieben der Profile wenigstens in eine quer zu den vorstehenden Flanschen (10, 14, 15) verlaufende Richtung verhindern, und die im Querschnitt konisch aneinander angreifen.

4. Profilsystem nach einem der vorhergehenden Ansprüche, bei dem das Profil (2) zwei der vorstehenden Flansche (14, 15) aufweist, welche, wenn die Profile (1, 2) montiert sind, den vorstehenden Flansch (10) des ersten Profils (1) auf beiden Seiten überlappen und jeweils eine der zugehörigen zweiten Angriffsflächen (16, 17) aufweisen, und bei dem die Verbindungsteile (3) jeweils auf einer Seite des vorstehenden Flansches (10) des ersten Profils (1) an den zweiten Angriffsflächen (16, 17) angreifen.

5. Profilsystem nach einem der vorhergehenden Ansprüche, bei dem wenigstens eine der Angriffsflächen (11, 16, 17; 51, 56) durch eine der zugehörigen Basis (9) zugewandte Wandfläche eines Angriffsflanschs gebildet ist, der quer von dem betreffenden vorstehenden Flansch absteht.

6. Profilsystem nach einem der vorhergehenden Ansprüche, bei dem die Verbindungsteile (3; 43; 83) jeweils aus einem Betätigungselement (4; 44; 84) und wenigstens einem Verriegelungselement (7, 8; 47, 87) bestehen, das mittels des Betätigungselements (4; 44; 84) vom vorstehenden Flansch (10; 50) des ersten Profils (1; 41) weg gedrückt werden kann, wobei, wenn sich die Profile (1, 2; 41, 42) im montierten Zustand befinden, die Verriegelungselemente (7, 8; 47, 48) jeweils eine direkte Brücke zwischen Angriffsflächen (11, 16, 17; 51, 56) der verbundenen Profile (1, 2; 41, 42) bilden.

7. Profilsystem nach Anspruch 6, bei dem die wenigstes eine von dem vorstehenden Flansch (10) des ersten Profils (1) getragene Angriffsfläche (11) oder an diesen anliegende Flächen jedes der Verriegelungselemente (7, 8) mit einem Verriegelungsrand (30) ausgebildet sind.

8. Profilsystem nach einem der vorhergehenden Ansprüche, bei dem die Verbindungsteile (3; 43) jeweils aus einem Ansatz (4; 44) und einem über den Ansatz (4, 44) geschraubten Verriegelungselement (7,8,47) bestehen.

9. Profilsystem nach den Ansprüchen 4 und 8, bei dem jeder der Ansätze (4) zwei Verriegelungselemente (7, 8) auf beiden Seiten des vorstehenden Flanschs (10) des ersten Profils (1) aufweist, und bei den an jedem der Ansätze (4) vorgesehene Gewindeabschnitte (5, 6), die mit zwei zugehörigen Verbindungselementen (7, 8) zusammengreifen, entgegengesetzt gewunden sind.

10. Profilsystem nach Anspruch 8 oder 9, bei dem die Verriegelungselemente (7, 8; 47) in bezug auf das erste Profil (1, 41) jeweils in einer Nut des ersten Profils (1, 41) gehalten sind, so daß sie im wesentlichen gegen Drehung um die Mittellinie des zugehörigen Ansatzes (4, 44) gesichert sind.

## Revendications

1. Système de sections comprenant une première section (1; 41) et une seconde section (2; 42) et des éléments de liaison (3; 43; 83) pour coupler lesdites sections (1, 2; 41, 42) parallèlement les unes aux autres dans des positions réparties sur les sections (1, 2; 41, 42), la première section (1; 41) comportant une bride (10; 50) s'étendant depuis une embase (9) et. portant au moins une première surface d'engagement (11; 51) espacée de et tournée vers ladite embase (9), **caractérisé en ce que**
la seconde section (2; 42) comporte une bride (14, 15; 54) en saillie depuis une embase (12, 13) et portant au moins une surface d'engagement (16, 17; 56) espacée de et tournée vers ladite embase associée (12, 13) et qui, lorsque les sections (1, 2; 41, 42) sont dans un état couplé, recouvre ladite bride en saillie (10; 50) de la première section (1; 41) et **en ce que**, s'ils sont portés par la première section (1; 41), les éléments de liaison (3; 43; 83), étant chacun dans un état rétracté, permettent auxdites brides en saillie (10; 14; 15; 50; 54) d'être amenées dans ladite configuration en recouvrement mutuel et, chacune étant dans un état dans lequel, par rapport audit état rétracté, elles font saillie davantage dans la direction transversale par rapport à ladite bride en saillie (10; 50) de la première section (1; 41), s'engagent avec lesdites première et seconde surfaces d'engagement (11; 16, 17; 56, 57) et bloquent lesdites sections (1, 2; 41, 42) dans ledit état couplé.

2. Système de sections selon la revendication 1, dans lequel au moins l'une desdites surfaces d'engagement (11, 16, 17; 51, 56) ou au moins une surface de chacun des éléments de liaison (3; 43; 83), qui dans un état monté, s'engage avec l'une des surfaces d'engagement, s'étend au-dessous d'un angle de coin par rapport à ladite direction transversale, de façon que les sections (1, 2; 41, 42) soient bloqués ensemble si des éléments de liaison (3; 43; 83) sont poussés vers leur état en saillie.

3. Système de sections selon la revendication 1 ou 2, dans lequel la première et la seconde section (1, 2) en état monté comportent des parties en butée (23, 24, 25, 26) empêchant le déplacement mutuel desdites sections dans au moins une direction transversale auxdites brides en saillie (10, 14, 15) et qui, vues en coupe transversale, s'engagent de façon conique l'une avec l'autre.

4. Système de sections selon l'une quelconque des revendications précédentes, dans lequel la seconde section (2) comporte deux desdites brides en saillie (14, 15) qui, si les sections (1, 2) sont en état monté, recouvrent ladite bride en saillie (10) de la première section (1) de chaque côté et chacune porte une desdites secondes surfaces d'engagement associées (16, 17) et dans lequel lesdits éléments de liaison (3) de chaque côté de ladite bride en saillie (10) de la première section (1) s'engagent avec lesdites secondes surfaces d'engagement (16, 17).

5. Système de sections selon l'une quelconque des revendications précédentes, dans lequel au moins l'une desdites surfaces d'engagement (11, 16, 17; 51, 56) est formée par une surface de paroi, tournée vers ladite embase associée (9) d'une bride d'engagement faisant saillie transversalement par rapport à la bride en saillie appropriée.

6. Système de sections selon l'une quelconque des revendications précédentes, dans lequel les éléments de liaison (3; 43; 83) sont constitués chacun d'un élément fonctionnel (4; 44; 84) et au moins d'un élément de blocage (7, 8; 47, 87) pouvant être poussé à travers ledit élément fonctionnel (4; 44; 84) pour s'éloigner de ladite bride en saillie (10; 50) de la première section (3 ; 41), dans lequel, si lesdites sections (1, 2; 41, 42) sont dans un état monté, lesdits éléments de blocage (7, 8; 47; 87) constituent chacun un pontage direct entre les surfaces d'engagement (11, 16, 17; 51, 56) des sections couplées (1, 2; 41, 42).

7. Système de sections selon la revendication 6, dans lequel ladite au moins une surface d'engagement (11) portée par la bride en saillie (10) de la première section (1), ou des surfaces, en butée contre celle-ci, de chacun desdits éléments de blocage (7, 8) sont conçues avec un bord de blocage (30).

8. SyBtème de sections selon l'une quelconque des revendications précédentes, dans lequel les éléments de liaison (3; 43) sont constitués chacun d'un goujon (4, 44) et d'un élément de blocage (7, 8, 47) vissé sur ledit goujon (4, 44).

9. Système de sections selon les revendications 4 et 8, dans lequel chacun desdits goujons (4) porte deux éléments de blocage (7, 8) de chaque côté de la bride en projection (10) de la première section (1) et les parties à filetage de vis (5, 6) de chacun desdits goujons (4) en engagement avec deux éléments associés parmi lesdits éléments de blocage (7, 8) sont enroulées en sens inverse.

10. Système de sections selon la revendication 8 ou 9, dans lequel lesdits éléments de blocage (7, 8, 47) par rapport à la première section (1, 41) sont logés chacun dans une gorge de la première section (1, 41) de façon sensiblement à ne pas pouvoir tourner autour de la ligne centrale du goujon associé (4, 44).
